# EUROPEAN PATENT APPLICATION

(11) **EP 4 803 165 A1**
(43) Date of publication of application: **09.09.2026**
(21) Application number: 24805088.2
(22) Date of filing: 17.10.2024
(51) Int. Cl.: A63C 17/00

(54) **DETACHABLE ROLLER SKATING STRUCTURE, ROLLER SKATE AND ROLLER SKATE WEARING METHOD**

(30) Priority: 09.10.2024 CN 202411403156
(71) Applicant: Shanxi Wofei Zhuque Technology Co., Ltd., Taiyuan, Shanxi 030000 (CN)
(72) Inventor: YUE, Haibao, Taiyuan, Shanxi 030000 (CN); GAO, Erbing, Taiyuan, Shanxi 030000 (CN); GUO, Maiju, Taiyuan, Shanxi 030000 (CN)
(74) Representative: Isern Patentes y Marcas S.L.
(86) International application number: PCT/CN2024/125461
(87) International publication number: WO 2026/076738

(57) **Abstract**

A detachable roller skating structure includes a framework, a locking mechanism, and a tumbler switch. The framework is provided with a receiving cavity, the locking mechanism is disposed in the receiving cavity, the locking mechanism includes two buckles and a driving assembly located between the two buckles, the driving assembly is linked to the tumbler switch on an outer side of the framework, and a limiting lock is disposed on the tumbler switch. According to the present application, the roller skating structure can be more conveniently detached from or mounted onto a sole of a regular shoe, achieving free change between the regular shoe and the roller skate. In addition, the self-locking of the roller skating structure is achieved by the arrangement of the limiting lock, and the use safety of the roller skates is improved.

## Description

The present disclosure is presented based on and claims priority to Chinese Patent Application No. 202411403156.4, filed on October 9, 2024, which is incorporated herein by reference in its entirety.

### Technical field

The present application belongs to the technical field of detachable shoes, and in particular, relates to a detachable roller skating structure, a roller skate, and a method for wearing the roller skate.

### Background

On the market, there are two types of roller skates with single-row and double-row wheels, most of which are of a one-piece design. These shoes are usually inconvenient to wear or carry, requiring the wearer to carry a pair of roller skates while wearing a pair of shoes, failing to change at any time. In addition, the one-piece roller skates are bulky and inconvenient to carry. One type of shoe features a thick insole that hides the wheels therein, and when the shoes are used, the wheels can be opened. The shoes can slide for a short distance, but due to the thicker sole, the distance between the wheels is small, and the wheels are thin, resulting in a slow skating speed and unstable skating. The shoes cannot provide a real skating experience like the roller skates. Another type of shoe is designed with a detachable structure as the sole of each roller skate, but other detaching and mounting processes are complicated, and the shoes cannot be conveniently mounted on the spot.

### Summary

To solve the problems mentioned in the background, the present application provides a detachable roller skating structure, a roller skate, and a method for wearing the roller skate. According to the present application, buckles on a locking mechanism move toward or away from each other, such that a sole structure can be more conveniently and quickly detached from or mounted onto the sole of a regular shoe, and thus the free and random change of the regular shoe and the roller skate can be achieved. In addition, the wheels and the distance between the wheels remain unchanged, such that the real skating experience of the roller skate can be achieved.

A first aspect of the present application provides a detachable roller skating structure, including:
a framework, where the framework is provided therein with a receiving cavity that extends along a length direction;
a locking mechanism, mounted in the receiving cavity, where the locking mechanism includes two buckles and a driving assembly located between the two buckles, the driving assembly drives the two buckles to move toward or away from each other, the two buckles are respectively located at two ends of the receiving cavity in the length direction and protrude upward from the receiving cavity, and the buckles are used to lock the roller skating structure onto a sole of a regular shoe; and
a tumbler switch, disposed on an outer side of the framework and in transmissive connection to the driving assembly, where the tumbler switch includes a tumbler housing and a limiting lock disposed on the tumbler housing, and the limiting lock is capable of being locked onto the framework.

Further, the locking mechanism further includes two reset elastic members, and each of the buckles corresponds to one of the reset elastic members; one end of the reset elastic member abuts against the buckle, and the other end of the reset elastic member abuts against an inner wall of the receiving cavity; the reset elastic member is in a compressed state when the buckle is in a locked state.

Further, the limiting lock includes a locking member that is movably disposed in the tumbler housing along a direction perpendicular to a side wall of the framework and a compression spring disposed between the locking member and an inner wall of the tumbler housing, a locking hole is formed in one side of the framework opposite to the locking member, and one end of the locking member distal to the compression spring is capable of being inserted into the locking hole under an action of the compression spring.

Further, the detachable roller skating structure further includes two stop-retain plates, where the stop-retain plates are disposed beside the buckles and are disposed in one-to-one correspondence with the buckles, the stop-retain plates are fixed onto an upper surface of the framework and disposed to extend upward, and the stop-retain plates are used to be inserted onto the sole of the regular shoe to achieve front-back locking of the roller skating structure on the sole of the regular shoe.

Further, the driving assembly includes a tumbler cap, two sides of the tumbler cap are separately provided with a tumbler member, the tumbler cap is in transmissive connection to the tumbler members, and one end of the tumbler member distal to the tumbler cap is connected to the buckle; the tumbler cap is connected to the tumbler switch, the tumbler switch can be manually rotated to drive the tumbler cap to rotate, and the tumbler cap drives the buckle to move horizontally through the tumbler member.

Further, the tumbler cap is connected to the tumbler member through a connecting rod, one end of the connecting rod is in hinge connection to the tumbler cap, and the other end is in hinge connection to the tumbler member.

Further, a pin shaft hole is formed at an axial center position of the tumbler cap, a pin shaft is mounted into the pin shaft hole, and one end of the pin shaft penetrates through the framework and is connected to the tumbler switch outside the framework.

Further, the framework and the tumbler members are further provided with a movement limiting assembly, and the movement limiting assembly restricts the tumbler members from moving horizontally when the buckles are in a locked state.

Further, the buckle includes a movable part and a clamping hook fixed onto the movable part, the clamping hook is in a 7-shaped structure, clamping hooks of the two buckles are disposed opposite to each other, a top surface of the clamping hook is a first inclined surface, and the first inclined surface is disposed obliquely downward toward a direction distal to the driving assembly.

Further, when the first inclined surface is subjected to a force F perpendicular to the first inclined surface, the first inclined surface is configured to split F into Fₓ and F_{y}, and when the buckle is in the locked state, a pressure of the reset elastic member is F_{z}, where F_{z} is greater than Fₓ.

Further, the roller skating structure further includes positioning plates, where the positioning plates are disposed in one-to-one correspondence with the two buckles, the positioning plate is provided with limiting holes, and the corresponding buckle penetrates upward through the limiting holes and moves horizontally in the limiting holes.

A second aspect of the present application provides a roller skate, including a sole, where lock-retain plates are mounted on a lower bottom surface of the sole, a clamping hole is formed in the lock-retain plate, and the sole is in engagement connection to the buckles on the detachable roller skating structure of any one of the above through the clamping holes.

A third aspect of the present application provides a method for wearing a roller skate, including the following steps:
S1: opening, by a user, a limiting lock on a tumbler switch to enable the tumbler switch to rotate freely;
S2: manually rotating the tumbler switch, where the tumbler switch drives a tumbler cap to rotate, and the tumbler cap drives a tumbler member to move back and forth, such that two buckles move toward each other along a length direction of a framework, the buckles squeeze reset elastic members, and the reset elastic members are in a compressed state; and
S3: mounting a regular shoe with lock-retain plates on a sole onto the framework, such that the buckles penetrate through clamping holes in the lock-retain plates, loosening the tumbler switch, where the buckles return to original positions to fix the lock-retain plates onto the framework under an action of reset springs, and rotating the tumbler switch back to lock the limiting lock onto the framework.
the present application has the following beneficial effects:
   (1) According to the present application, through the arrangement of the framework, the locking mechanism, and the positioning plates, the roller skating structure is designed into an integral structure that can be separately detached. When not in use, the roller skating structure can be detached and placed in the backpack of the user, and due to a small volume and a light weight, the separate roller skating structure is more convenient to carry. While the regular shoe functions the same as the usually worn shoes and can be continue to wear for other sports activities or ordinary walking; when ice skating is to be carried out, the roller skating structure can be taken out and then mounted and locked onto the sole of the regular shoe that is being worn, achieving the change into the roller skate. The roller skating structure of the present application is not only convenient to carry and mount, but also achieves the real skating experience of the roller skate.
   (2) The driving assembly of the present application includes the tumbler cap, the tumbler members, and the tumbler switch. The tumbler members are driven to move horizontally through the rotation of the tumbler cap, thereby achieving the horizontal movement of the buckles. In addition, the tumbler switch itself is provided with the limiting lock, and the self-locking of the roller skating structure can be achieved through the reset elastic members and the limiting lock after the roller skating structure is mounted in place, thereby preventing safety accidents caused by the automatic separation of the sole structure in the movement process. In addition, according to the present application, the tumbler members and the framework are provided with the movement limiting assembly, and the movement limiting assembly and the tumbler switch simultaneously restrict the tumbler members from moving horizontally, which can effectively improve the safety of the roller skate in the skating process.
   (3) The buckle of the present application includes a clamping hook of a 7-shaped structure, where the top surface of the clamping hook is the first inclined surface, and the first inclined surface is disposed obliquely downward toward a direction distal to the driving assembly. When an acting force perpendicular to the first inclined surface is applied onto the first inclined surface, the buckle can generate a force for moving backward, and then the buckle can be opened to mount the regular shoe on the roller skating structure of the present application. The buckle structure of the present application can achieve wearing while standing.
   (4) When the buckle structure of the present application is mounted onto the sole of the regular shoe, in the using process, when the first inclined surface is subjected to the force F, the first inclined surface splits the force F into Fₓ and F_{y}. Further, the reset elastic member generates a forward pressure F_{z} onto the buckle. By setting F_{z} being always greater than Fₓ, the self-locking of the buckle can be achieved, and the use safety of the roller skate is further improved.

### Brief description of the drawings

To more clearly illustrate technical solutions in embodiments of the present application or in the prior art, the drawings required to be used in the description of the embodiments or the prior art are briefly introduced below. It is obvious that the drawings in the description below are some embodiments of the present application, and those of ordinary skill in the art can obtain other drawings based on the drawings provided herein without creative efforts.
FIG. 1 is an exploded view of a roller skating structure according to an embodiment of the present application;
FIG. 2 is an assembly diagram of a roller skating structure according to an embodiment of the present application;
FIG. 3 is a cross-sectional view of a roller skating structure according to an embodiment of the present application;
FIG. 4 is a structural view of a locking mechanism of a roller skating structure according to an embodiment of the present application;
FIG. 5 is a structural view of a framework of a roller skating structure according to an embodiment of the present application;
FIG. 6 is a structural view of a tumbler switch of a roller skating structure according to an embodiment of the present application;
FIG. 7 is a structural view of a buckle according to an embodiment of the present application;
FIG. 8 is another structural view of a buckle according to an embodiment of the present application;
FIG. 9 is a schematic showing a self-locking of buckles according to an embodiment of the present application;
FIG. 10 is a cross-sectional view of a roller skating structure according to another embodiment of the present application; and
FIG. 11 is a structural view of a locking mechanism of a roller skating structure according to another embodiment of the present application.

In the figures: 1: framework, 11: receiving cavity, 111: first cavity, 112: second cavity, 113: third cavity, 2: locking mechanism, 21: buckle, 211: movable part, 212: clamping hook, 213: first inclined surface, 214: back surface, 22: driving assembly, 221: tumbler cap, 2211: tumbler sleeve, 2212: protrusion part, 222: tumbler member, 2221: abutting block, 223: stop pin, 224: connecting rod, 225: pin shaft, 226: plug-in shaft, 3: positioning plate, 31: limiting hole, 4: reset elastic member, 5: tumbler switch, 51: tumbler housing, 52: locking member, 53: compression spring, 6: shoe board, 7: stop-retain plate, 8: lock-retain plate, 81: positioning hole, 82: clamping hole, and 9: sole.

### Detailed description

Technical solutions in embodiments of the present application are clearly and completely described below with reference to the drawings in the present application, and it is obvious that the described embodiments are only some but not all embodiments of the present application. Based on the embodiments of the present application, all other embodiments obtained by those of ordinary skill in the art without creative work shall fall within the protection scope of the present application.

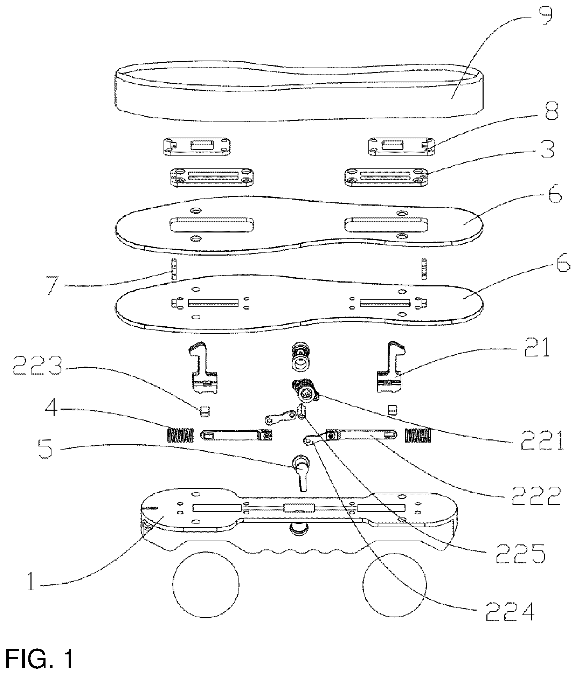

The following, in conjunction with FIG. 1 to FIG. 11 and specific embodiments, provides a detailed explanation of the present application.

As shown in FIG. 1 to FIG. 11, the present application provides a detachable roller skating structure to be mounted onto the sole of a regular shoe, such that the roller skating structure can be quickly mounted to and separated from the regular shoe, thereby achieving the free change between the regular shoe and the roller skate. The regular shoes can be worn separately for walking or other sports activities, and the regular shoes can be, but are not limited to, sports shoes, sneakers, leather shoes, or the like. It is to be understood that lock-retain plates matching the roller skating structure are disposed on the sole of the regular shoe, and quick mounting and detachment of the roller skating structure can only be achieved through the lock-retain plates.

The sole structure of the present application includes a framework 1, a locking mechanism 2, and a tumbler switch 5. The framework 1 is provided therein with a receiving cavity 11 that extends along a length direction, and the receiving cavity 11 is a cavity with an upper-end opening. The locking mechanism 2 is mounted in the receiving cavity 11, the locking mechanism 2 includes two buckles 21 and a driving assembly 22 located between the two buckles 21, the driving assembly 22 drives the two buckles 21 to move toward or away from each other to open the buckles 21 or lock the buckles 21 onto the sole of the regular shoe, the two buckles 21 are respectively located at two ends of the receiving cavity 11 in the length direction and protrude upward from the receiving cavity 11, and the buckles 21 are used to achieve locking to and separation from the sole of the regular shoe. When the two buckles 21 move toward each other, the buckles 21 are in an opening process or an opened state, and in this case, the regular shoe can be detached from the roller skating structure; when the two buckles 21 move away from each other, the buckles 21 can lock the roller skating structure onto the sole of the regular shoe, such that the change for use of the roller skating skate is achieved, thereby achieving the dual-use effect of the roller skate. The tumbler switch 5 is disposed on the outer side of the framework 1 and is in transmissive connection to the driving assembly 22, where the tumbler switch 5 includes a tumbler housing 51 and a limiting lock disposed on the tumbler housing 51, and the limiting lock is capable of being locked onto the framework 1. The tumbler switch 5 is disposed on the outer side of the framework 1, which is convenient for a user to operate. When used by the user, the limiting lock on the tumbler switch 5 can be opened to enable the tumbler switch 5 to freely rotate and thus drive the driving assembly 22 to move. The movement of the driving assembly 22 drives the buckles 21 to move horizontally, thereby achieving the locking and unlocking of the buckles 21. In addition, the arrangement of the limiting lock can ensure that the relative positions of the buckles 21 are fixed and unchanged in the using process of the roller skates, thereby ensuring the safety in the skating process.

According to the present application, through the arrangement of the framework 1, the locking mechanism 2, and the tumbler switch 5, the roller skating structure is designed into an integral structure that can be separately detached. When not in use, the roller skating structure can be detached and placed in the backpack of the user, and due to a small volume and a light weight, the separate roller skating structure is more convenient to carry. While the regular shoe functions the same as the usually worn shoes and can be continue to wear for other sports activities or ordinary walking; when ice skating is to be carried out, the roller skating structure can be taken out and then mounted and locked onto the sole of the regular shoe that is being worn, achieving the change into the roller skate. The roller skating structure of the present application is not only convenient to carry and mount and has high safety performance, but also achieves the real skating experience of the roller skate.

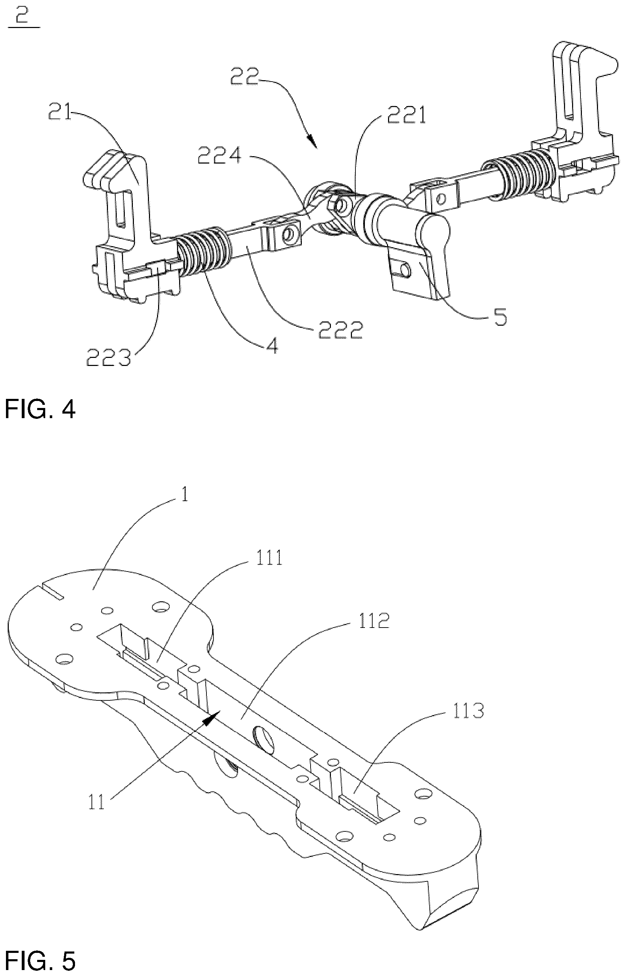

Specifically, with reference to FIG. 5, the receiving cavity 11 of the present application includes a first cavity 111, a second cavity 112, and a third cavity 113 sequentially communicated along the length direction of the framework 1. The two buckles 21 are respectively located in the first cavity 111 and the third cavity 113, the driving assembly 22 is located in the second cavity 112, and the telescopic ends of the driving assembly 22 extend into the first cavity 111 and the third cavity 113 to be fixedly connected to the buckles 21 through stop pins 223. The locking mechanism 2 can be placed in the receiving cavity 11 through the upper opening of the receiving cavity 11, which simplifies the mounting process, such that the locking mechanism 2 can be mounted outside the framework 1 first and then placed in the receiving cavity 11 as a whole. It can be appreciated that the room in the receiving cavity 11 of the present application is small, and the size of each cavity is only suitable for assembling parts to which it fits; therefore, it is not appropriate to assemble the locking mechanism 2 in the receiving cavity 11.

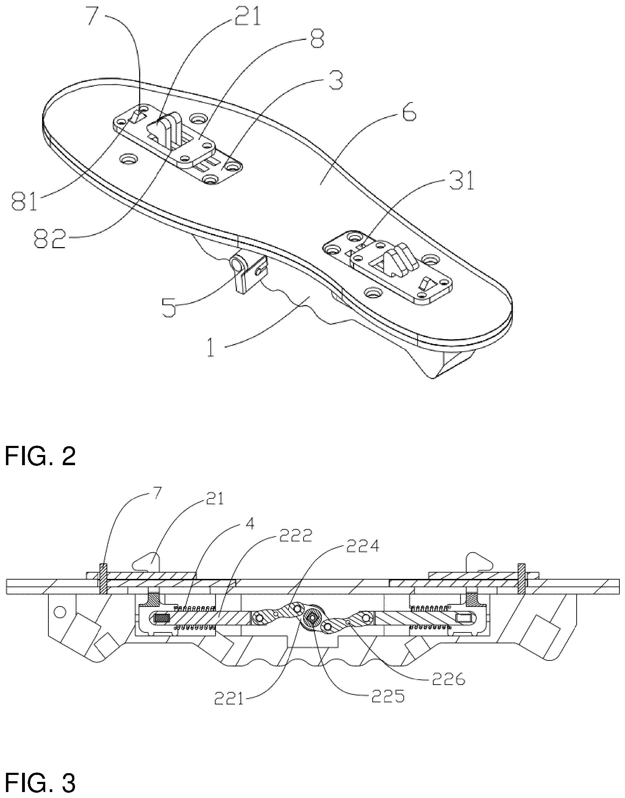

Specifically, with reference to FIG. 3, FIG. 4, FIG. 10, and FIG. 11, the locking mechanism 2 further includes reset elastic members 4, and each buckle 21 corresponds to one of the reset elastic members 4; the two reset elastic members 4 are respectively located in the first cavity 111 and the third cavity 113, where one end of one reset elastic member 4 abuts against the corresponding buckle 21, and the other end abuts against the inner wall of the first cavity 111; one end of the other reset elastic member 4 abuts against the corresponding buckle 21, and the other end abuts against the inner wall of the third cavity 113. When the buckles 21 are in a locked state, the reset elastic members 4 are in a compressed state. In other words, the buckles 21 can move away from each other under the action of the reset elastic members 4, and the buckles 21, in the moving process, will also drive the limiting lock to reset to a locking position and lock the limiting lock onto the framework 1, thereby achieving the automatic locking of the roller skating structure onto the sole of the regular shoe, reducing the mounting procedures, and also improving the convenience of mounting. Preferably, the reset elastic member 4 is a spring.

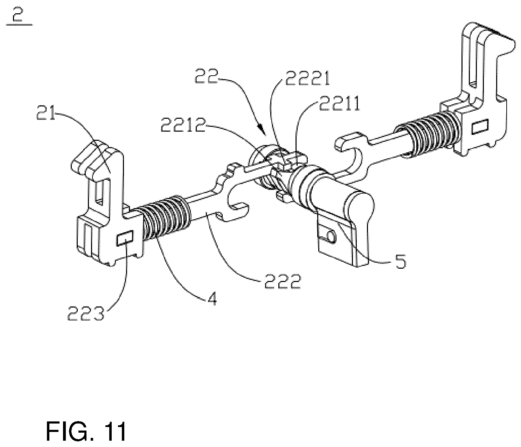

Specifically, with reference to FIG. 4 and FIG. 11, the driving assembly 22 includes a tumbler cap 221, two sides of the tumbler cap 221 are separately provided with a tumbler member 222, the tumbler cap 221 is in transmissive connection to the tumbler members 222, and one end of the tumbler member 222 distal to the tumbler cap 221 is connected to the buckle 21; the reset elastic member 4 is sleeved on the tumbler member 222, and the tumbler member 222 can provide guidance to the direction of an acting force of the reset elastic member 4 to prevent the reset elastic member 4 from bending. When the tumbler cap 221 is rotated, the tumbler cap 221 drives the buckles 21 to move horizontally through the tumbler members 222. In the embodiments, one connection method of the tumbler member 222 and the buckle 21 is as follows. The buckle 21 is provided with an inserting hole, one end of the tumbler member 222 is inserted into the inserting hole, a stop pin hole penetrates through the tumbler member 222 and the buckle 21, and a stop pin 223 is mounted in the stop pin hole, thereby achieving the relative fixation between the tumbler member 222 and the buckle 21, but is not limited thereto. As long as the relative fixation between the tumbler member 222 and the buckle 21 can be achieved, the method should fall within the protection scope of the present application.

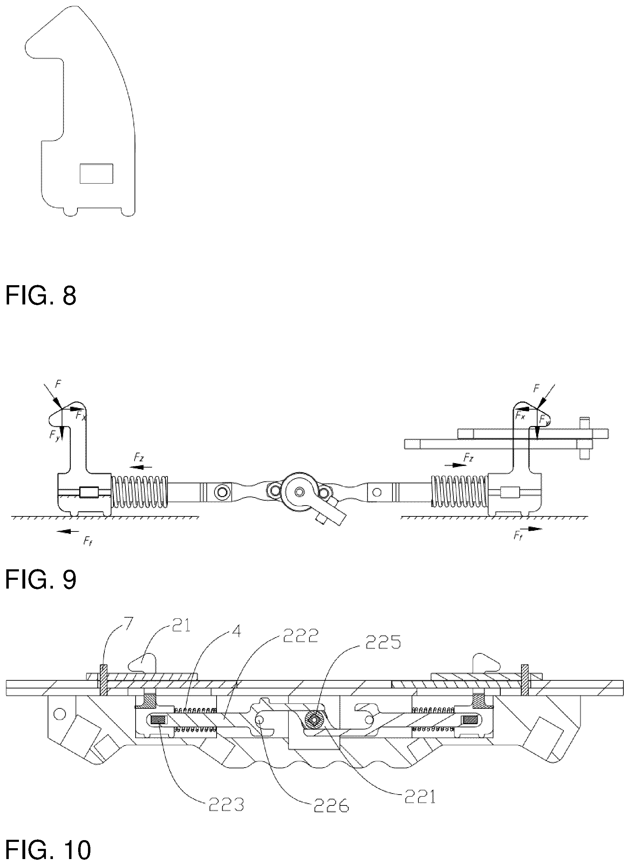

In some embodiments, with reference to FIG. 10 and FIG. 11, the tumbler cap 221 includes a guide column (not shown in the drawings) and tumbler sleeves 2211 spaced apart and sleeving on the guide column. Protrusion parts 2212 provided symmetrically are formed on the tumbler sleeves 2211, one end of the tumbler member 222 laps on the guide column and is located between the protrusion parts 2212 of the two tumbler sleeves, an abutting block 2221 in contact with the protrusion 2212 of the tumbler sleeve is provided on the tumbler member 222, and the tumbler sleeve 2211 rotates to enable the protrusion part 2212 to interact with the abutting block 2221 to drive the tumbler member 222 to move horizontally at the top of the guide column. When the buckle 21 is in the locked state, the tumbler cap 221 can be rotated reversely to enable the protrusion part 2212 of the tumbler sleeve to rotate to one end of the abutting block 2221 distal to the corresponding buckle 21, such that the backward movement of the tumbler member 222 can be limited, and safety problems caused by the roller skate structure separating from the sole of the regular shoe under the action of an external force in the using process of the roller skate can be prevented. In addition, to further prevent the tumbler member 222 from moving backward in the skating process of the roller skate, a movement limiting assembly is provided on the tumbler members 222 and the framework 1, which can effectively improve the safety of the roller skate in the skating process. In one embodiment, the movement limiting assembly includes plug-in shafts 226, the tumbler members 222 and the framework 1 are both provided with inserting holes matching the plug-in shaft 226; when the positions of the inserting holes in the framework 1 are locked with the buckles 21, the inserting holes in the tumbler members 222 correspond thereto; when the soles of the regular shoe and the roller skate are locked, the plug-in shafts 226 penetrate through the inserting holes in the tumbler members 222 and the framework 1 to limit the tumbler members 222, such that the tumbler members 222 cannot move backward, thereby achieving dual safety assurance. In another embodiment, the movement limiting assembly adopts the form of a gear and a rack (not shown in the drawings) for limiting. For example, a rack structure is processed on the tumbler member, a guide clamping groove is formed on the side wall of the framework, a gear assembly or a ratchet wheel assembly is movably disposed in the guide clamping groove, and engagement with the rack is achieved through a change in the positions of the gear or the ratchet wheel, thereby preventing the gear from moving backward. Certainly, in other embodiments, the movement limiting assembly may also adopt other structures; as long as the limiting of the tumbler member can be achieved to prevent the backward movement thereof, this shall fall within the protection scope of the present application.

In some other embodiments, with reference to FIG. 3 and FIG. 4, the tumbler cap 221 is connected to the tumbler member 222 through a connecting rod 224, one end of the connecting rod 224 is in hinge connection to the tumbler cap 221, and the other end is in hinge connection to the tumbler member 222. When the tumbler cap 221 is rotated, the tumbler cap 221 is rotated to drive the linkage of the connecting rod 224, and the connecting rod 224 pulls the tumbler member 222 to move horizontally. When the buckle 21 is in the locked state, the relative positions of the tumbler cap 221, the connecting rod 224, and the tumbler member 222 are fixed to restrict the tumbler member 222 from moving backward. Preferably, when the buckle 21 is in the locked state, the connecting rod 224 and the tumbler member 222 are close to a straight state, and the effect of interaction is better. In addition, to further prevent the tumbler member 222 from moving backward in the skating process of the roller skate, a movement limiting assembly is provided on the tumbler members 222 and the framework 1, which can effectively improve the safety of the roller skate in the skating process. In an embodiment, the movement limiting assembly includes plug-in shafts 226, and the tumbler members 222 and the framework 1, or the connecting rods 224 and the framework 1 are provided with inserting holes matching the plug-in shaft 226; when the soles of the regular shoe and the roller skate are locked, the plug-in shafts 226 penetrate through the inserting holes in the tumbler members 222 or the connecting rods 224 and the framework 1 to limit the tumbler members 222, such that the tumbler members 222 cannot move backward, thereby achieving dual safety guarantee. In another embodiment, the movement limiting assembly adopts the form of a gear and a rack (not shown in the drawings) for limiting. For example, a rack structure is processed on the tumbler member, a guide clamping groove is formed on the side wall of the framework, a gear assembly or a ratchet wheel assembly is movably disposed in the guide clamping groove, and engagement with the rack is achieved through a change in the positions of the gear or the ratchet wheel, thereby preventing the gear from moving backward. Certainly, in other embodiments, the movement limiting assembly may also adopt other structures; as long as the limiting of the tumbler member can be achieved to prevent the backward movement thereof, this shall fall within the protection scope of the present application.

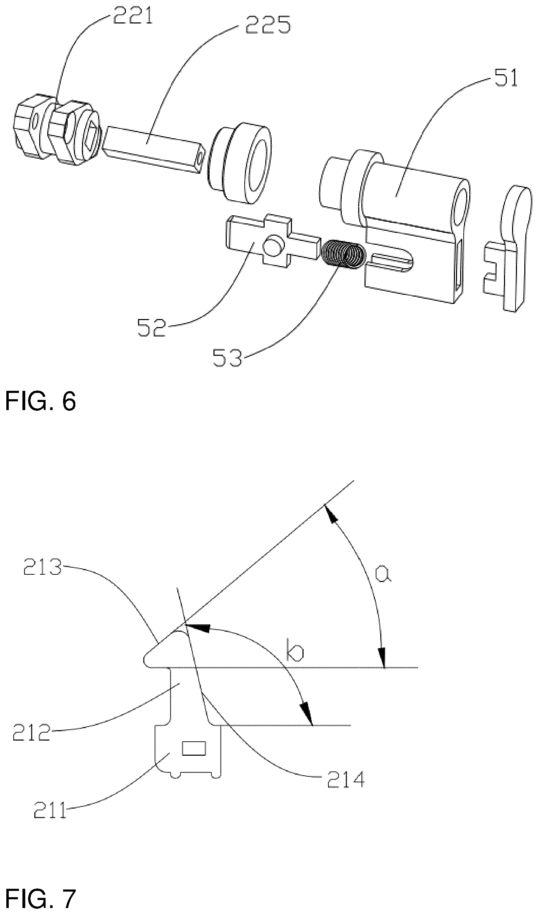

Specifically, with reference to FIG. 6, a pin shaft hole is formed at the axial center position of the tumbler cap 221, a pin shaft 225 is mounted into the pin shaft hole, and one end of the pin shaft 225 penetrates through the framework 1 and is connected to the tumbler switch 5 outside the framework 1. When the tumbler switch 5 is rotated, the tumbler switch 5 drives the tumbler cap 221 to rotate through the pin shaft 225, thereby achieving the horizontal movement of the tumbler member 222. The shapes of the pin shaft hole and the pin shaft 225 of the present application may be quadrilateral, pentagonal, hexagonal, etc., but are not limited thereto, as long as the relative fixation between the two can be achieved. In addition, the tumbler switch 5 is a switch with the limiting lock, that is, the rotation of the tumbler cap 221 can be achieved, and the rotation of the tumbler cap 221 can also be limited.

Specifically, with reference to FIG. 6, the tumbler switch 5 includes a tumbler housing 51 connected to the pin shaft 225, a locking member 52 that is movably disposed in the tumbler housing 51 along a direction perpendicular to the side wall of the framework 1, and a compression spring 53 disposed between the locking member 52 and the inner wall of the tumbler housing 51. A locking hole (not shown in the drawing) is formed in one side of the framework 1 opposite to the locking member 52, and one end of the locking member 52 distal to the compression spring 53 is capable of being inserted into the locking hole under the action of the compression spring 53. In the present application, the arrangement position and distribution number of the locking holes need to be designed according to the specific structure of the locking mechanism 2, which are not particularly limited herein. It should be noted that, when the buckle 21 and the regular shoe are in the locked state, the locking member 52 is inserted into the locking hole under the action of the compression spring 53, that is, achieving the locking of the driving assembly 22, such that the buckle 21 does not move in the using process of the roller skate; when the roller skating structure is mounted or detached, the locking member 52 is pulled first to separate the locking member 52 from the locking hole, and then the tumbler switch 5 is rotated to achieve the movement of the buckle 21.

Specifically, with reference to FIG. 1 and FIG. 2, shoe boards 6 are mounted on the upper end surface of the framework 1, through holes are formed on the shoe board 6, and positioning plates 3 are mounted at the positions of the through holes. The shape of the shoe board 6 is the same as the shape of the sole of the regular shoe, and the shoe boards 6 can cover the upper openings of the receiving cavity 11 except the positions of the buckles 21 to prevent dust and other dirt from entering the receiving cavity. Certainly, in the present application, the shoe boards 6 may not be provided, the upper end surface of the framework 1 is designed into a shape matching the sole of the regular shoe, and at the same time, a cover plate is disposed to cover the upper openings of the receiving cavity 11, which has the same effect as that of the foregoing embodiment.

Specifically, with reference to FIG. 7 and FIG. 8, the buckle 21 includes a movable part 211 and a clamping hook 212 fixed onto the movable part 211. The clamping hook 212 is in a 7-shaped structure, and two clamping hooks 212 are disposed opposite to each other, that is, the hook-shaped part of the clamping hook 212 faces outward; the top surface of the clamping hook 212 is a first inclined surface 213, and the first inclined surface 213 is disposed obliquely downward toward a direction distal to the driving assembly 22. The included angle between the first inclined surface 213 and the horizontal plane is a, and a is an obtuse angle. An acting force perpendicular to the first inclined surface 213 is applied to the first inclined surface 213, such that the buckle 21 generates a force to move backward, and thus the two buckles 21 move toward each other, thereby opening the buckles 21 and mounting the regular shoe onto the roller skating structure of the present application. In addition, the included angle between one back surface 214 of the clamping hook 212 distal to the hook-shaped part and the horizontal plane is b, and b is greater than or equal to 90°; b is generally greater than 90° to ensure that the force for driving the buckle 21 to move backward is large. Certainly, as shown in FIG. 8, the back surface 214 of the clamping hook may also be designed as an arc surface, as long as the included angle between the tangent plane of the arc surface and the horizontal plane is b and b is always greater than 90°. However, the shape of the back surface of the clamping hook is not limited thereto.

Specifically, with reference to FIG. 9, when the first inclined surface 213 is subjected to the force F perpendicular to the first inclined surface 213, the first inclined surface 213 is configured to split F into Fₓ and F_{y}; F_{y} enables a friction force F_{f} to be generated on the contact surface between the buckle 21 and the receiving cavity 11. When the buckle 21 is in the locked state, a forward pressure generated by the reset elastic member 4 on the buckle 21 is F_{z}, and F_{z} is always greater than Fₓ, such that the self-locking of the buckle 21 can be achieved. It should be noted that, to improve the safety of the roller skate, the greater the friction force, the better the self-locking. To further increase the friction force, the value of the roughness of the contact surface between the buckle 21 and the receiving cavity 21 may be increased appropriately, for example, Ra 12.5 or Ra 25. Since the force F applied on the first inclined surface 213 is a variable, Fₓ and F_{f} are also variables. In the specific design process, the forward pressure generated by the reset elastic member 4 on the buckle 21 can be set to be greater than the maximum value of Fₓ, thereby ensuring self-locking.

According to the present application, the safety of the roller skate in the using process is fully guaranteed through the self-locking of the buckle, the arrangement of the limiting lock on the tumbler switch, and the movement limiting assembly in the framework.

Specifically, with reference to FIG. 1 and FIG. 2, the roller skating structure further includes positioning plates 3. The positioning plates 3 can be fixed onto the framework 1 through fasteners such as bolts, and are located at the upper openings at two ends of the receiving cavity 11 and are in one-to-one correspondence with the two buckles 21. The positioning plate 3 is provided with limiting holes, and the corresponding buckle 21 penetrates upward through the limiting holes and moves horizontally in the limiting holes. The limiting hole is a strip-shaped hole with a certain length, such that the buckle 21 can move horizontally within a certain range.

Specifically, with reference to FIG. 2, one stop-retain plate 7 is further disposed beside each buckle 21. The stop-retain plate 7 is fixed on the upper surface of the framework 1 and penetrates through the positioning plate 3 to extend upward, and the stop-retain plate 7 is configured to position the regular shoe; correspondingly, lock-retain plates 8 are disposed on the sole of the regular shoe, a positioning hole 81 is formed in the lock-retain plate 8. When the roller skating structure of the present application is mounted, the stop-retain plate 7 and the positioning hole 81 should be aligned first, and then the sole structure can be accurately mounted onto the regular shoe. In addition, the stop-retain plate 7 extends upward into the positioning hole 81 of the lock-retain plate 8, such that the stop-retain plate 7 and the buckle 21 can act together to achieve the front-back locking and up-down locking of the roller skate.

The present application further provides a roller skate, including a regular shoe. The regular shoe includes a sole 9, lock-retain plates 8 are mounted on the lower bottom surface of the sole 9, a clamping hole 82 is formed in the lock-retain plate 8, and the sole 9 is in engagement connection to the buckles 21 on the detachable roller skating structure of any one of the above through the clamping holes 82.

Since the roller skate of the present application adopts all the technical solutions of all the embodiments of the roller skating structure described above, the roller skate at least has all the beneficial effects brought by the technical solutions of the embodiments of the sole structure, which is not reiterated herein.

There are two methods for wearing the roller skate of the present application.

The first wearing method is to wear while standing, and includes the following steps:
In S1, when a regular shoe is worn on the foot of a user, at the same time, the user takes out a roller skating structure and operates a locking member 52 to enable the locking member to move in a tumbler housing 51, such that the locking member 52 is separated from a locking hole.
In S2, the roller skating structure is placed below the regular shoe, clamping holes 82 in lock-retain plates 8 on the sole of the regular shoe are aligned with stop-retain plates 7, and at the same time, the sole of the regular shoe is in contact with a first inclined surface 213 of a buckle 21.
In S3, the user slowly applies a pressure downward on the first inclined surface 213, the buckle 21 is squeezed to move backward, and at the same time, a reset elastic member 4 is squeezed to generate a resilience force; when the lock-retain plate 8 moves in place, the reset elastic member 4 pushes the buckle 21 back to its original position, and the buckle 21 engages with the lock-retain plate 8 to complete the up-down locking and front-back locking of the roller skate.

The second wearing method includes the following steps:
In S1, a user operates a locking member 52 to enable the locking member to move in a tumbler housing 51, such that the locking member 52 is separated from a locking hole.
In S2, a tumbler switch 5 is rotated, the tumbler switch 5 drives a tumbler cap 221 to rotate, and the tumbler cap 221 drives tumbler members 222 to move back and forth, such that two buckles 21 move toward each other along the length direction of a framework 1; the buckles 21 squeeze reset elastic members 4, and the reset elastic members 4 are in a compressed state.
In S3, a shoe with lock-retain plates 8 on the sole is mounted onto the framework 1, the buckles 21 penetrate through clamping holes in the lock-retain plates 8, the tumbler switch 5 is loosened, the buckles 21 return to original positions to fix the lock-retain plates 8 onto the framework 1 under the action of the reset elastic members 4, the tumbler switch 5 rotates back, and the locking member 52 is inserted into the locking hole under the action of a compression spring 53.

A method for detaching the roller skating structure of the present application includes the following steps:
When a user finishes skating, the user opens a tumbler switch 5, such that a locking member 52 on the tumbler switch 5 is separated from a locking hole and thus the rotation of the tumbler switch 5 can be achieved. The tumbler switch 5 drives a tumbler cap 221 to rotate, and the tumbler cap 221 rotates to drive tumbler members 222 on two sides thereof to horizontally move back and forth, such that buckles 21 can be opened and the roller skating structure can be pulled out, thereby achieving the detachment of a roller skate.
The present application and the embodiments thereof are described above, and the description is not restrictive. The drawings only show one of the embodiments of the present application, and the actual structure is not limited thereto. In summary, if those of ordinary skill in the art are inspired by the present application, and, without departing from the spirit of the present application, design structural modes and embodiments similar to the technical solutions herein without creative efforts, all of these should fall within the protection scope of the present application.

## Claims

1. A detachable roller skating structure, comprising:
a framework, the framework is provided therein with a receiving cavity that extends along a length direction;
a locking mechanism, mounted in the receiving cavity, the locking mechanism comprises two buckles and a driving assembly located between the two buckles, the driving assembly drives the two buckles to move toward or away from each other, the two buckles are respectively located at two ends of the receiving cavity in the length direction and protrude upward from the receiving cavity, and the buckles are used to lock the roller skating structure onto a sole of a regular shoe; and
a tumbler switch, disposed on an outer side of the framework and in transmissive connection to the driving assembly, the tumbler switch comprises a tumbler housing and a limiting lock disposed on the tumbler housing, and the limiting lock is capable of being locked onto the framework.

2. The detachable roller skating structure according to claim 1, wherein the locking mechanism further comprises two reset elastic members, and each of the buckles corresponds to one of the reset elastic members; one end of the reset elastic member abuts against the buckle, and the other end of the reset elastic member abuts against an inner wall of the receiving cavity; and the reset elastic member is in a compressed state when the buckle is in a locked state.

3. The detachable roller skating structure according to claim 1, wherein the limiting lock comprises a locking member that is movably disposed in the tumbler housing along a direction perpendicular to a side wall of the framework and a compression spring disposed between the locking member and an inner wall of the tumbler housing, a locking hole is formed in one side of the framework opposite to the locking member, and one end of the locking member distal to the compression spring is capable of being inserted into the locking hole under an action of the compression spring.

4. The detachable roller skating structure according to claim 1, further comprising two stop-retain plates, wherein the stop-retain plates are disposed beside the buckles and are disposed in one-to-one correspondence with the buckles, the stop-retain plates are fixed onto an upper surface of the framework and disposed to extend upward, and the stop-retain plates are used to be inserted onto the sole of the regular shoe to achieve front-back locking of the roller skating structure on the sole of the regular shoe.

5. The detachable roller skating structure according to claim 1, wherein the driving assembly comprises a tumbler cap, two sides of the tumbler cap are separately provided with a tumbler member, the tumbler cap is in transmissive connection to the tumbler members, and one end of the tumbler member distal to the tumbler cap is connected to the buckle; and the tumbler cap is connected to the tumbler switch, the tumbler switch can be manually rotated to drive the tumbler cap to rotate, and the tumbler cap drives the buckle to move horizontally through the tumbler member.

6. The detachable roller skating structure according to claim 5, wherein the tumbler cap is connected to the tumbler member through a connecting rod, one end of the connecting rod is in hinge connection to the tumbler cap, and the other end is in hinge connection to the tumbler member.

7. The detachable roller skating structure according to claim 5, wherein a pin shaft hole is formed at an axial center position of the tumbler cap, a pin shaft is mounted into the pin shaft hole, and one end of the pin shaft penetrates through the framework and is connected to the tumbler switch outside the framework.

8. The detachable roller skating structure according to claim 5, wherein the framework and the tumbler members are further provided with a movement limiting assembly, and the movement limiting assembly restricts the tumbler members from moving horizontally when the buckles are in a locked state.

9. The detachable roller skating structure according to claim 2, wherein the buckle comprises a movable part and a clamping hook fixed onto the movable part, the clamping hook is in a 7-shaped structure, clamping hooks of the two buckles are disposed opposite to each other, a top surface of the clamping hook is a first inclined surface, and the first inclined surface is disposed obliquely downward toward a direction distal to the driving assembly.

10. The detachable roller skating structure according to claim 9, wherein when the first inclined surface is subjected to a force F perpendicular to the first inclined surface, the first inclined surface is configured to split F into Fₓ and F_{y}, and when the buckle is in the locked state, a pressure of the reset elastic member is F_{z}, wherein F_{z} is greater than Fₓ.

11. The detachable roller skating structure according to claim 1, further comprising positioning plates, wherein the positioning plates are disposed in one-to-one correspondence with the two buckles, the positioning plate is provided with limiting holes, and the corresponding buckle penetrates upward through the limiting holes and moves horizontally in the limiting holes.

12. A roller skate, comprising a sole of a regular shoe, wherein lock-retain plates are mounted on a lower bottom surface of the sole, a clamping hole is formed in the lock-retain plate, and the sole is in engagement connection to the buckles on the detachable roller skating structure according to any one of claims 1 to 11 through the clamping holes.

13. A method for wearing a roller skate, comprising the following steps:
S1: opening, by a user, a limiting lock on a tumbler switch to enable the tumbler switch to rotate freely;
S2: manually rotating the tumbler switch, wherein the tumbler switch drives a tumbler cap to rotate, and the tumbler cap drives a tumbler member to move back and forth, such that two buckles move toward each other along a length direction of a framework, the buckles squeeze reset elastic members, and the reset elastic members are in a compressed state; and
S3: mounting a regular shoe with lock-retain plates on a sole onto the framework, such that the buckles penetrate through clamping holes in the lock-retain plates, loosening the tumbler switch, wherein the buckles return to original positions to fix the lock-retain plates onto the framework under an action of reset springs, and rotating the tumbler switch back to lock the limiting lock onto the framework.
